# EUROPÄISCHE PATENTANMELDUNG

(11) **EP 4 324 316 A1**
(43) Veröffentlichungstag der Anmeldung: **21.02.2024**
(21) Anmeldenummer: 23179428.0
(22) Anmeldetag: 15.06.2023
(51) Int. Cl.: A01B 69/00

(54) **LANDWIRTSCHAFTLICHE ARBEITSMASCHINE MIT EINEM FAHRERASSISTENZSYSTEM ZUR UNTERSTÜTZUNG DER DURCHFÜHRUNG EINER LANDWIRTSCHAFTLICHEN ARBEITSAUFGABE**

(30) Priorität: 18.08.2022 DE 102022120935
(71) Anmelder: CLAAS E-Systems GmbH, 49201 Dissen (DE)
(72) Erfinder: Meyer zu Helligen, Lars Peter, 32139 Spenge (DE)
(74) Vertreter: CLAAS Gruppe

(57) **Zusammenfassung**

Die Erfindung betrifft eine landwirtschaftliche Arbeitsmaschine mit einem Fahrerassistenzsystem (3), wobei die landwirtschaftliche Arbeitsmaschine (1) eine Sensoranordnung (4) aufweist, wobei das Fahrerassistenzsystem (3) eine Anzeigevorrichtung (5) und eine Eingabevorrichtung (6) zur natürlichsprachigen Interaktion mit einem Nutzer (7) aufweist, wobei das Fahrerassistenzsystem (3) dem Nutzer (7) Vorschläge (8) zur Optimierung von Einstellungen der landwirtschaftlichen Arbeitsmaschine (1) macht, wobei in einem Speicher des Fahrerassistenzsystems (3) Einsatzdaten zur aktuellen landwirtschaftlichen Arbeitsaufgabe hinterlegt sind, wobei das Fahrerassistenzsystem (3) eine Planungsroutine durchführt, in der das Fahrerassistenzsystem (3) aus den Einsatzdaten eine Planung der landwirtschaftlichen Arbeitsaufgabe erzeugt, wobei ein Detaillierungsgrad der Planung abhängig von den vorhandenen Einsatzdaten ist. Es wird vorgeschlagen, dass das Fahrerassistenzsystem (3) mittels der Sensoranordnung (4) eine aktuelle Fahrsituation der landwirtschaftlichen Arbeitsmaschine (1) erfasst und dass das Fahrerassistenzsystem (3) dem Nutzer (7) abhängig von der aktuellen Fahrsituation und abhängig von dem Detaillierungsgrad der Planung über die Anzeigevorrichtung (5) natürlichsprachige Vorschläge (8) zur Optimierung der Planung der landwirtschaftlichen Arbeitsaufgabe macht, die der Nutzer (7) interaktiv über die Eingabevorrichtung (6) beantworten kann.

## Beschreibung

Die vorliegende Erfindung betrifft eine landwirtschaftliche Arbeitsmaschine mit einem Fahrerassistenzsystem zur Unterstützung der Durchführung einer landwirtschaftlichen Arbeitsaufgabe gemäß dem Oberbegriff von Anspruch 1.

Im Vordergrund stehen vorliegend landwirtschaftliche Arbeitsmaschinen aller Art. Dies betrifft Zugmaschinen, insbesondere Traktoren, aber auch Erntemaschinen wie Mähdrescher und Feldhäcksler.

Der bekannte Stand der Technik (EP 3 518 647 A1), von dem die Erfindung ausgeht, betrifft eine landwirtschaftliche Arbeitsmaschine gemäß dem Oberbegriff von Anspruch 1. Bei dieser landwirtschaftlichen Arbeitsmaschine ist ein Fahrerassistenzsystem zur Planung einer landwirtschaftlichen Arbeitsaufgabe vorgesehen. Dieses Fahrerassistenzsystem liefert vorteilhafte Ergebnisse, wenn Einsatzdaten der Planung bereits feststehen. Liegen hingegen wenige oder keine Einsatzdaten betreffend die aktuelle landwirtschaftlichen Arbeitsaufgabe und/oder das aktuelle Feld vor, ist eine Planung schwierig und nur grob möglich.

Grundsätzlich ist auch bekannt, die Planung basierend auf aktuellen und aufgezeichneten Sensordaten zu verbessern. Allerdings liegen gerade bei einem neuen Feld zu Beginn der Durchführung der landwirtschaftlichen Arbeitsaufgabe für eine nicht vernachlässigbare Zeitspanne nur wenige Daten, insbesondere aufgezeichnete Sensordaten, vor, sodass das Fahrerassistenzsystem nicht immer in der Lage ist, bereits selbsttätig eine verbesserte Planung vorzuschlagen.

Es ist dabei eine Herausforderung, den bekannten Stand der Technik zu verbessern.

Der Erfindung liegt das Problem zugrunde, die bekannte landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass der Nutzer andere Informationen als das Fahrerassistenzsystem besitzt, jedoch häufig keine Zeit und/oder nicht das notwendige Wissen hat, die Planung zu übernehmen. Somit können häufig weder das Fahrerassistenzsystem noch der Nutzer die Planung vollständig übernehmen. Vorgeschlagen wird daher, dass das Fahrerassistenzsystem interaktiv mit dem Nutzer zusammenarbeitet. Dafür macht das Fahrerassistenzsystem, basierend auf einer initialen Planung, dem Nutzer Vorschläge zur Optimierung der Planung.

Diese Vorschläge können sukzessive während der Durchführung der Feldbearbeitung gemacht werden, womit das Fahrerassistenzsystem Stück für Stück Erkenntnisse über das Wissen des Nutzers gewinnt und die Planung verbessert.

Im Einzelnen wird vorgeschlagen, dass das Fahrerassistenzsystem mittels der Sensoranordnung eine aktuelle Fahrsituation der landwirtschaftlichen Arbeitsmaschine erfasst und dass das Fahrerassistenzsystem dem Nutzer abhängig von der aktuellen Fahrsituation und abhängig von dem Detaillierungsgrad der Planung über die Anzeigevorrichtung natürlichsprachige Vorschläge zur Optimierung der Planung der landwirtschaftlichen Arbeitsaufgabe macht, die der Nutzer interaktiv über die Eingabevorrichtung beantworten kann.

Die Unteransprüche geben bevorzugte Ausgestaltungen der vorschlagsgemäßen Lehre an.

Im Folgenden wird die Erfindung anhand einer lediglich Ausführungsbeispiele darstellenden Zeichnung näher erläutert. In der Zeichnung zeig
- Fig. 1: eine abstrahierte Darstellung der Funktionen des Fahrerassistenzsystems und
- Fig. 2: unterschiedliche Vorschläge des Fahrerassistenzsystems.

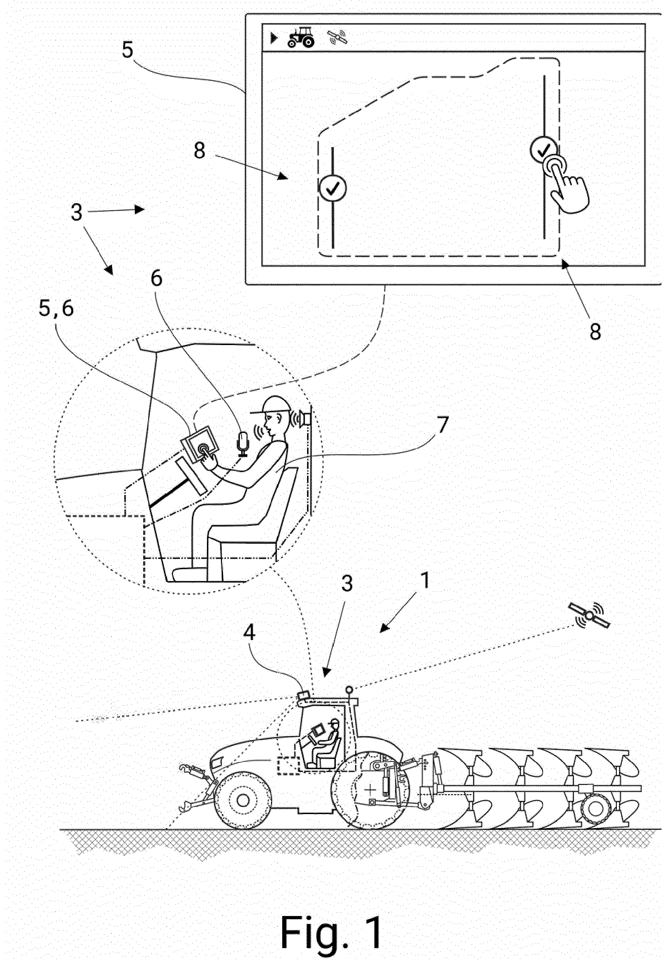

Fig. 1 zeigt eine landwirtschaftliche Arbeitsmaschine 1, die beispielhaft ein Feld 2 pflügt. Im Fokus stehen vorliegend alle Arten von landwirtschaftlichen Arbeitsaufgaben. Interessant ist besonders der Anwendungsfall der Aussaat. Bei einer Aussaat muss das Feld 2 eingeteilt werden, es müssen die Pflanzenreihen geplant und abgearbeitet werden und diese Planung muss jeweils auf die Gegebenheiten des Feldes 2 abgestimmt sein. Die landwirtschaftliche Arbeitsmaschine 1 weist ein Fahrerassistenzsystem 3 und eine Sensoranordnung 4 auf. Das Fahrerassistenzsystem 3 weist eine Anzeigevorrichtung 5 und eine Eingabevorrichtung 6 zur natürlichsprachigen Interaktion mit einem Nutzer 7 auf.

In dem bevorzugten Anwendungsfall der Figuren weiß das Fahrerassistenzsystem 3 zu Beginn der landwirtschaftlichen Arbeitsaufgabe wenig oder gar nichts über das zu bearbeitende Feld 2 und hat insbesondere keine akkuraten Feldgrenzen oder gar keine Feldgrenzen im Speicher. Somit kann das Fahrerassistenzsystem 3 hier und vorzugsweise zu Beginn der landwirtschaftlichen Arbeitsaufgabe keine Fahrtroutenplanung durchführen.

Das Fahrerassistenzsystem 3 steuert hier und vorzugsweise die landwirtschaftliche Arbeitsmaschine 1, indem es Maschinenparameter an Arbeitsaggregaten der landwirtschaftlichen Arbeitsmaschine 1 nach Art einer Steuerung und/oder Regelung einstellt. Es ist somit hier und vorzugsweise direkt in die Funktionen der landwirtschaftlichen Arbeitsmaschine 1 eingebunden. Es stellt weiterhin eine Schnittstelle zum Nutzer 7 bereit, der über das Fahrerassistenzsystem 3 die Steuerung der landwirtschaftlichen Arbeitsmaschine 1 optimieren kann. Außerdem unterbreitet das Fahrerassistenzsystem 3 dem Nutzer 7 Vorschläge 8 zur Optimierung der landwirtschaftlichen Arbeitsmaschine 1. Es kann vorgesehen sein, dass das Fahrerassistenzsystem 3 die landwirtschaftliche Arbeitsmaschine 1 lenkt und vorzugsweise fährt. Hier und vorzugsweise weist das Fahrerassistenzsystem 3, insbesondere nur, Hardware auf, die sich auf der landwirtschaftlichen Arbeitsmaschine 1 befindet. Vorgesehene Software läuft dann auf dieser Hardware.

Grundsätzlich macht das Fahrerassistenzsystem 3 dem Nutzer 7 Vorschläge 8 zur Optimierung der Durchführung der landwirtschaftlichen Arbeitsmaschine 1. Diese Vorschläge 8 können die hier im Vordergrund stehende Fahrtroute 9, die Einstellung von Maschinenparametern und dergleichen betreffen.

In einem Speicher des Fahrerassistenzsystems 3 sind Einsatzdaten zur aktuellen landwirtschaftlichen Arbeitsaufgabe hinterlegt. Diese Einsatzdaten können bei unterschiedlichen landwirtschaftlichen Arbeitsaufgaben unterschiedlich ausgeprägt sein. Im einfachsten Fall sind sehr wenige Einsatzdaten vorhanden, beispielsweise ist nur bekannt, dass ein Feld 2 gepflügt werden soll. Ebenso können auch viele Einsatzdaten vorhanden sein und die vorschlagsgemäße Optimierung kann sich sehr im Detail abspielen. Die Einsatzdaten können sämtliche für die landwirtschaftliche Arbeitsaufgabe spezifischen Daten umfassen, inklusive Felddaten.

Das Fahrerassistenzsystem 3 führt eine Planungsroutine durch, in der das Fahrerassistenzsystem 3 aus den Einsatzdaten eine Planung der landwirtschaftlichen Arbeitsaufgabe erzeugt. Ein Detaillierungsgrad der Planung ist dabei abhängig von den vorhandenen Einsatzdaten. Ist also sehr wenig über die landwirtschaftliche Arbeitsaufgabe bekannt, wird entsprechend wenig Planung durchgeführt. Ist viel über die landwirtschaftliche Arbeitsaufgabe bekannt, wird eine detaillierte Planung durchgeführt. Hier und vorzugsweise umfasst die Planung zumindest eine Fahrtroute 9. In manchen Fällen wird diese Fahrtroute 9 jedoch anfangs noch nicht geplant, da hierfür Informationen fehlen.

Das in den Figuren dargestellte und insoweit bevorzugte Ausführungsbeispiel betrifft eine landwirtschaftliche Arbeitsmaschine 1 mit einem Fahrerassistenzsystem 3 zur Unterstützung der Durchführung einer landwirtschaftlichen Arbeitsaufgabe, wobei die landwirtschaftliche Arbeitsmaschine 1 eine Sensoranordnung 4 aufweist, wobei das Fahrerassistenzsystem 3 eine Anzeigevorrichtung 5 und eine Eingabevorrichtung 6 zur natürlichsprachigen Interaktion mit einem Nutzer 7 aufweist, wobei das Fahrerassistenzsystem 3 dem Nutzer 7 Vorschläge 8 zur Optimierung von Einstellungen der landwirtschaftlichen Arbeitsmaschine 1 macht, wobei in einem Speicher des Fahrerassistenzsystems 3 Einsatzdaten zur aktuellen landwirtschaftlichen Arbeitsaufgabe hinterlegt sind, wobei das Fahrerassistenzsystem 3 eine Planungsroutine durchführt, in der das Fahrerassistenzsystem 3 aus den Einsatzdaten eine Planung der landwirtschaftlichen Arbeitsaufgabe erzeugt, wobei ein Detaillierungsgrad der Planung abhängig von den vorhandenen Einsatzdaten ist.

Wesentlich ist nun, dass das Fahrerassistenzsystem 3 mittels der Sensoranordnung 4 eine aktuelle Fahrsituation der landwirtschaftlichen Arbeitsmaschine 1 erfasst und dass das Fahrerassistenzsystem 3 dem Nutzer 7 abhängig von der aktuellen Fahrsituation und abhängig von dem Detaillierungsgrad der Planung über die Anzeigevorrichtung 5 natürlichsprachige Vorschläge 8 zur Optimierung der Planung der landwirtschaftlichen Arbeitsaufgabe macht, die der Nutzer 7 interaktiv über die Eingabevorrichtung 6 beantworten kann.

Die aktuelle Fahrsituation umfasst diejenigen Sensordaten, die beschreiben, wie sich Feld 2 und landwirtschaftliche Arbeitsmaschine 1 zueinander und zur Durchführung der landwirtschaftlichen Arbeitsaufgabe verhalten, also beispielsweise GPS-Daten, Lenkdaten, Felddaten usw. Die Sensoranordnung 4 kann Softwarekomponenten zur Situationserkennung, insbesondere Modelle zur Prädiktion, aufweisen.

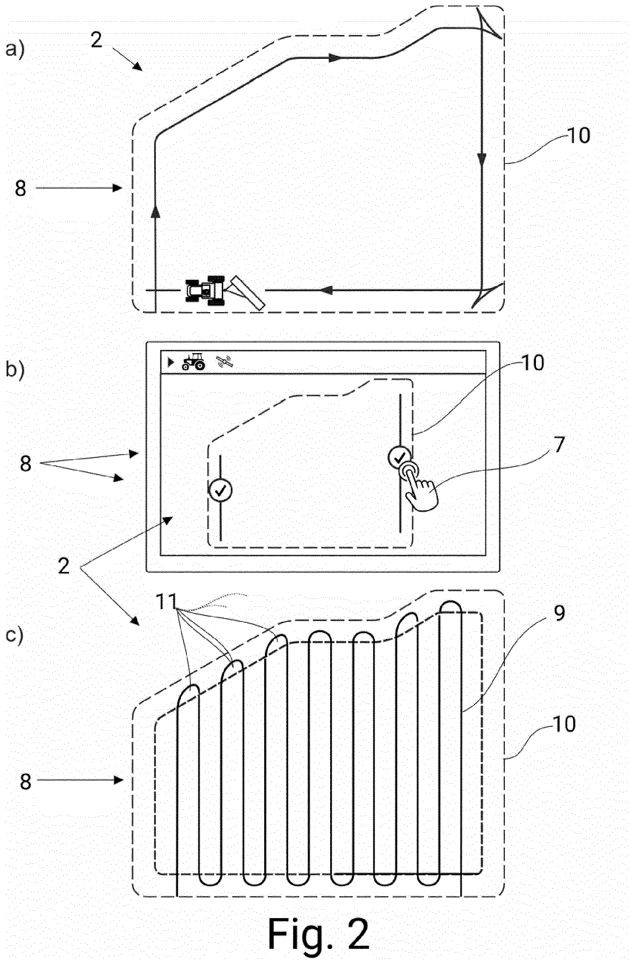

Die Vorschläge 8 können alle Aspekte der Durchführung der landwirtschaftlichen Arbeitsaufgabe umfassen. Fig. 2 a) zeigt beispielsweise Feldgrenzen, die erkannt wurden, nachdem das Feld 2 einmal umrundet wurde und die nun als neue Feldgrenzen vorgeschlagen werden. Hier und vorzugsweise wird eine neue oder abweichende Fahrtroute 9 und/oder ein neuer oder abweichender Abschnitt einer Fahrtroute 9 vorgeschlagen. Weitere Vorschläge 8 werden noch erläutert. Die Vorschläge 8 werden in natürlicher Sprache vom Fahrerassistenzsystem 3 vorgeschlagen. Wie die Figuren zeigen, müssen die Vorschläge 8 jedoch nicht vollständig natürlichsprachig formuliert werden, sondern können auch grafische Aspekte umfassen. Die sprachlichen Anteile sind in den Figuren nicht dargestellt. In Fig. 1 und Fig. 2b) beispielsweise wurden zwei Teilfahrtrouten vorgeschlagen. Dazu kann das Fahrerassistenzsystem 3 eine natürlichsprachige Erklärung liefern und der Nutzer 7 kann auswählen, ob diese korrekt erkannt wurden und so verwendet werden sollen, um daraus in Kombination mit den Feldgrenzen in Fig. 2 a) die in Fig. 2 c) dargestellte Fahrtroute 9 zu planen.

Weiter ist hier und vorzugsweise vorgesehen, dass das Fahrerassistenzsystem 3 mehrere unterschiedliche Optimierungsroutinen durchführt, die, insbesondere unabhängig voneinander, Vorschläge 8 generieren, dass das Fahrerassistenzsystem 3 in einer Auswahlroutine abhängig vom Detaillierungsgrad auswählt, welche der generierten Vorschläge 8 an den Nutzer 7 kommuniziert werden, vorzugsweise, dass das Fahrerassistenzsystem 3 die generierten Vorschläge 8 über ein gemeinsames Interface der Anzeigevorrichtung 5 kommuniziert, weiter vorzugsweise, dass das Fahrerassistenzsystem 3 die unterschiedlichen Optimierungsroutinen abhängig vom Detaillierungsgrad startet oder aktiviert und/oder triggerabhängig startet.

Das Fahrerassistenzsystem 3 kann beispielsweise eine Optimierungsroutine für Vorgewende, eine Optimierungsroutine für Hindernisse, eine Optimierungsroutine für die gesamte Fahrtroute 9, eine Optimierungsroutine für die Feldgrenzen und/oder eine Optimierungsroutine für die Arbeitsbreite durchführen. Einige der Optimierungsroutinen können kleinere Verbesserungen wie eine Optimierung der Ausbringung von Saatgut abhängig vom Bodentyp betreffen und andere Optimierungsroutinen können sehr substanzielle Aspekte wie die Fahrtroute 9 selbst betreffen.

Hier und vorzugsweise generieren die Optimierungsroutinen oder ein Teil der Optimierungsroutinen parallel Vorschläge 8 und das Fahrerassistenzsystem 3 leitet nur einige davon an den Nutzer 7 weiter, um dessen Zeit nicht übermäßig zu beanspruchen. Zusätzlich oder alternativ können einige Optimierungsroutinen in einem Standby-Modus verharren, bis ein Trigger auftritt, der sie aktiviert oder sie können erst bei Auftreten des Triggers gestartet werden. Ein Trigger kann ein explizites Starten der Routine durch den Nutzer 7 sein. Ein anderer Trigger kann beispielsweise das Fertigstellen einer Fahrtroute 9 sein, wodurch die Optimierungsroutine für das Vorgewende gestartet wird. Die aktiven Optimierungsroutinen sind hier und vorzugsweise vom Detaillierungsgrad abhängig, wie dies bei dem genannten Beispiel für das Vorgewende ebenfalls der Fall ist. Es können diejenigen Optimierungsroutinen und/oder Vorschläge 8 vom Fahrerassistenzsystem 3, insbesondere in der Auswahlroutine, bevorzugt werden, die voraussichtlich einen stärkeren Effekt, insbesondere einen höheren Effizienzgewinn, liefern.

Weiter ist hier und vorzugsweise vorgesehen, dass der Nutzer 7 über die Eingabevorrichtung 6 eine Bewertung der Vorschläge 8 eingeben, insbesondere auswählen oder bestätigen, kann, dass das Fahrerassistenzsystem 3 basierend auf der Bewertung eines Vorschlags 8 einen neuen Vorschlag 8 macht, vorzugsweise, dass die Bewertung auswählbar ist aus "besser", "gleich" und "schlechter".

Insbesondere kann vorgesehen sein, dass das Fahrerassistenzsystem 3 einen neuen Vorschlag 8 für das gleiche Problem erzeugt, wenn ein Vorschlag 8 abgelehnt wird, also beispielsweise eine andere Fahrtroute 9, wenn die vorgeschlagene Fahrtroute 9 abgelehnt wird. Dadurch, dass der Nutzer 7 die Vorschläge 8 bewertet, kann das Fahrerassistenzsystem 3 hinzulernen.

Weiter ist hier und vorzugsweise vorgesehen, dass das Fahrerassistenzsystem 3 Sensordaten der Sensoranordnung 4 aufzeichnet, dass das Fahrerassistenzsystem 3 aus den aufgezeichneten Sensordaten neue Einsatzdaten ermittelt, dass das Fahrerassistenzsystem 3 den Detaillierungsgrad der Planung der landwirtschaftlichen Arbeitsaufgabe sukzessive interaktiv erhöht, indem das Fahrerassistenzsystem 3 während der Durchführung der landwirtschaftlichen Arbeitsaufgabe sukzessive Vorschläge 8 macht, vorzugsweise, dass die Vorschläge 8 Veränderungen der bereits ausgeführten Planung betreffen können, dass der Nutzer 7 die Vorschläge 8 asynchron bewerten kann und dass das Fahrerassistenzsystem 3 basierend auf den Veränderungen der bereits ausgeführten Planung die weitere und/oder eine zukünftige Planung anpasst.

Es kann beispielsweise vorkommen, dass der Nutzer 7 ein dem Fahrerassistenzsystem 3 unbekanntes Hindernis umfährt oder dass die Feldgrenzen ungenau hinterlegt sind. Dann kommt es zu einer Abweichung zwischen der tatsächlichen Fahrtroute 9 und der geplanten Fahrtroute 9. Diese Abweichung muss nicht zwingend Einfluss auf die weitere Durchführung der landwirtschaftlichen Arbeitsaufgabe haben. Daher kann das Fahrerassistenzsystem 3 dem Nutzer 7 zu einem passenden Zeitpunkt den Vorschlag 8 unterbreiten, die hinterlegte Fahrtroute 9 oder Feldgrenze anzupassen, um für zukünftige Feldbearbeitungen bessere Einsatzdaten zu haben. Der Nutzer 7 kann diesen Vorschlag 8 beispielsweise durch ein unaufdringliches Icon angezeigt bekommen und, insofern asynchron, bearbeiten, wenn Zeit dafür ist.

Hier und vorzugsweise bietet das Fahrerassistenzsystem 3 dem Nutzer 7 ein einheitliches Interface für die Vorschläge 8, beispielsweise durch ein gemeinsames Icon, das auf neue Vorschläge 8 hinweist. Klickt der Nutzer 7 auf dieses Icon, öffnen sich Details zum Vorschlag 8. So werden viele unterschiedliche Optimierungen insgesamt sortiert, gefiltert und für den Nutzer 7 auf einfache Art und Weise zur Verfügung gestellt.

Weiter ist hier und vorzugsweise vorgesehen, dass die Vorschläge 8 eine Fahrtroute 9 der landwirtschaftlichen Arbeitsmaschine 1 betreffen, vorzugsweise, dass die Vorschläge 8 Änderungen von Referenzlinien 10 und/oder Vorgewendefahrtrouten 11 und/oder eine Aufteilung eines Feldes 2 in Teilfelder mit unterschiedlichen Referenzlinien 10 und/oder unterschiedlichen Fahrtrouten 9 betreffen. Hier zeigt sich wieder, dass bei der Aussaat, die vorliegend eine der bevorzugten landwirtschaftlichen Arbeitsaufgaben ist, die volle Bandbreite an Handlungsoptionen besteht. Die Vorgewendefahrtrouten 11, die Aufteilung des Feldes 2 mit den Referenzlinien 10 und die Fahrtrouten 9 müssen an die lokalen Gegebenheiten des Feldes 2 angepasst werden. Dabei sollten zukünftige landwirtschaftliche Arbeitsaufgaben mitberücksichtigt werden.

Hier und vorzugsweise verändert das Fahrerassistenzsystem 3 bei einem Annehmen eines Vorschlags 8 den betroffenen Maschinenparameter oder die betroffenen Planungsdaten automatisch. Die Vorschläge 8 können zusätzlich oder alternativ eine Arbeitsbreite und/oder eine Teilbreitenschaltung betreffen.

Ein beispielhafter Ablauf könnte vorliegend folgendermaßen aussehen. Als Erstes wird eine Optimierungsroutine für Referenzlinien 10 gestartet.

Wenn Feldgrenzen verfügbar sind, erstellt das Fahrerassistenzsystem 3 einen Standardsatz mit feldumschließenden Referenzlinien 10 und einer Hauptausrichtung und Nebenausrichtungen z.B. für Teilfelder oder einzelne Seiten eines Feldes 2.

Wenn Feldgrenzen nicht verfügbar sind, wird die Hintergrundaufzeichnung von Felddaten gestartet. Es erfolgt eine Fahrwegssegmentierung aus der nach einiger Zeit Referenzlinienvorschläge 10 generiert werden.

Die Referenzlinien 10 werden dargestellt und Datenbearbeitungsoptionen werden dem Nutzer 7 angeboten, insbesondere das Löschen, das Kombinieren von aufeinanderfolgenden Segmenten, das Konvertieren von Konturen zu Geraden und das Trennen von Segmenten.

Die so interaktiv erhaltenen Referenzlinien 10 werden verwendet, anschließend wird die Optimierungsroutine für das Vorgewende gestartet.

### Bezugszeichenliste

- 1: Landwirtschaftliche Arbeitsmaschine
- 2: Feld
- 3: Fahrerassistenzsystem
- 4: Sensoranordnung
- 5: Anzeigevorrichtung
- 6: Eingabevorrichtung
- 7: Nutzer
- 8: Vorschlag
- 9: Fahrtroute
- 10: Referenzlinien
- 11: Vorgewendefahrtroute

## Patentansprüche

1. Landwirtschaftliche Arbeitsmaschine mit einem Fahrerassistenzsystem (3) zur Unterstützung der Durchführung einer landwirtschaftlichen Arbeitsaufgabe, wobei die landwirtschaftliche Arbeitsmaschine (1) eine Sensoranordnung (4) aufweist, wobei das Fahrerassistenzsystem (3) eine Anzeigevorrichtung (5) und eine Eingabevorrichtung (6) zur natürlichsprachigen Interaktion mit einem Nutzer (7) aufweist, wobei das Fahrerassistenzsystem (3) dem Nutzer (7) Vorschläge (8) zur Optimierung von Einstellungen der landwirtschaftlichen Arbeitsmaschine (1) macht,
wobei in einem Speicher des Fahrerassistenzsystems (3) Einsatzdaten zur aktuellen landwirtschaftlichen Arbeitsaufgabe hinterlegt sind,
wobei das Fahrerassistenzsystem (3) eine Planungsroutine durchführt, in der das Fahrerassistenzsystem (3) aus den Einsatzdaten eine Planung der landwirtschaftlichen Arbeitsaufgabe erzeugt, wobei ein Detaillierungsgrad der Planung abhängig von den vorhandenen Einsatzdaten ist,
**dadurch gekennzeichnet,**
**dass** das Fahrerassistenzsystem (3) mittels der Sensoranordnung (4) eine aktuelle Fahrsituation der landwirtschaftlichen Arbeitsmaschine (1) erfasst und dass das Fahrerassistenzsystem (3) dem Nutzer (7) abhängig von der aktuellen Fahrsituation und abhängig von dem Detaillierungsgrad der Planung über die Anzeigevorrichtung (5) natürlichsprachige Vorschläge (8) zur Optimierung der Planung der landwirtschaftlichen Arbeitsaufgabe macht, die der Nutzer (7) interaktiv über die Eingabevorrichtung (6) beantworten kann.

2. Landwirtschaftliche Arbeitsmaschine nach Anspruch 1, **dadurch gekennzeichnet, dass** das Fahrerassistenzsystem (3) mehrere unterschiedliche Optimierungsroutinen durchführt, die, insbesondere unabhängig voneinander, Vorschläge (8) generieren, dass das Fahrerassistenzsystem (3) in einer Auswahlroutine abhängig vom Detaillierungsgrad auswählt, welche der generierten Vorschläge (8) an den Nutzer (7) kommuniziert werden, vorzugsweise, dass das Fahrerassistenzsystem (3) die generierten Vorschläge (8) über ein gemeinsames Interface der Anzeigevorrichtung (5) kommuniziert, weiter vorzugsweise, dass das Fahrerassistenzsystem (3) die unterschiedlichen Optimierungsroutinen abhängig vom Detaillierungsgrad startet oder aktiviert und/oder triggerabhängig startet.

3. Landwirtschaftliche Arbeitsmaschine nach Anspruch 1 oder 2, **dadurch gekennzeichnet, dass** der Nutzer (7) über die Eingabevorrichtung (6) eine Bewertung der Vorschläge (8) eingeben, insbesondere auswählen oder bestätigen, kann, dass das Fahrerassistenzsystem (3) basierend auf der Bewertung eines Vorschlags (8) einen neuen Vorschlag (8) macht, vorzugsweise, dass die Bewertung auswählbar ist aus "besser", "gleich" und "schlechter".

4. Landwirtschaftliche Arbeitsmaschine nach einem der vorhergehenden Ansprüche, **dadurch gekennzeichnet, dass** das Fahrerassistenzsystem (3) Sensordaten der Sensoranordnung (4) aufzeichnet, dass das Fahrerassistenzsystem (3) aus den aufgezeichneten Sensordaten neue Einsatzdaten ermittelt, dass das Fahrerassistenzsystem (3) den Detaillierungsgrad der Planung der landwirtschaftlichen Arbeitsaufgabe sukzessive interaktiv erhöht, indem das Fahrerassistenzsystem (3) während der Durchführung der landwirtschaftlichen Arbeitsaufgabe sukzessive Vorschläge (8) macht, vorzugsweise, dass die Vorschläge (8) Veränderungen der bereits ausgeführten Planung betreffen können, dass der Nutzer (7) die Vorschläge (8) asynchron bewerten kann und dass das Fahrerassistenzsystem (3) basierend auf den Veränderungen der bereits ausgeführten Planung die weitere und/oder eine zukünftige Planung anpasst.

5. Landwirtschaftliche Arbeitsmaschine nach einem der vorhergehenden Ansprüche, **dadurch gekennzeichnet, dass** die Vorschläge (8) eine Fahrtroute (9) der landwirtschaftlichen Arbeitsmaschine (1) betreffen, vorzugsweise, dass die Vorschläge (8) Änderungen von Referenzlinien (10) und/oder Vorgewendefahrtrouten (11) und/oder eine Aufteilung eines Feldes (2) in Teilfelder mit unterschiedlichen Referenzlinien (10) und/oder unterschiedlichen Fahrtrouten (9) betreffen.
